# EUROPEAN PATENT APPLICATION

(11) **EP 4 752 058 A1**
(43) Date of publication of application: **03.06.2026**
(21) Application number: 24216004.2
(22) Date of filing: 28.11.2024
(51) Int. Cl.: B64D 13/06

(54) **AIRCRAFT AIR-CONDITIONING SYSTEM HAVING A TWO-STAGE COOLING CIRCUIT AND AIRCRAFT HAVING AN AIR-CONDITIONING SYSTEM**

(71) Applicant: AIRBUS Operations GmbH, 21129 Hamburg (DE)
(72) Inventor: Klimpel, Frank, 21129 Hamburg (DE); Celikel, Gülberg, 21129 Hamburg (DE); Schmidt, Stephan-Anton, 21129 Hamburg (DE); Linares Lopez, Percy Jesus, 21129 Hamburg (DE)
(74) Representative: Schornack, Oliver

(57) **Abstract**

The present disclosure relates to an aircraft air-conditioning system (100) and corresponding aircraft, wherein ambient air is cooled by a cooling system (200) having a first cooling circuit (210) and a second cooling circuit (220) thermally coupled to one another via a common heat exchanger (205).

## Description

The present disclosure generally relates to an air-conditioning system having a two-stage cooling circuit and an aircraft having such air-conditioning system. Particularly, the present disclosure relates to an aircraft air-conditioning system and corresponding aircraft, wherein ambient air is cooled by a cooling system having a first and a second cooling circuit thermally coupled to one another via a common heat exchanger.

A conventional aircraft air-conditioning system uses bleed air from an aircraft engine that is expanded, cooled and conditioned for supply to an aircraft cabin. However, there is an aim to provide a bleedless air-conditioning system, in order to reduce the fuel consumption.

For instance, US 2017/275004 A1 and EP 3 168 154 A1 provide environmental control systems conditioning ambient air with a motorised compressor and heat exchangers arranged in a ram air channel to cool the ambient air. EP 3 168 154 A1 further includes a refrigerating apparatus comprising a refrigerant compressor driven by an electric motor, where the refrigerant is thermally coupled to the ambient air for additional cooling.

However, air-conditioning systems for an aircraft can still be improved, for example, with respect to their energy consumption.

It is therefore an object of the present disclosure to provide a more energy efficient air-conditioning system for an aircraft.

This object is solved by the present invention as defined in the independent claims. Preferred embodiments are defined by the dependent claims.

According to a first aspect to better understand the present disclosure, an aircraft air-conditioning system comprises an ambient air inlet configured to receive unpressurised ambient air, a cooling system configured to cool a refrigerant, and a heat exchanger cooling the ambient air. Unpressurised ambient air is to be understood as air taken from an ambient environment of the air-conditioning system, such as ambient air from the environment of the aircraft, in which such air-conditioning system is installed. The ambient air is received at the ambient environmental pressure depending only on a height at which the aircraft is currently located. As a mere example, the unpressurised ambient air can be received from an air inlet in an outer skin of the aircraft or from a ram air channel. The unpressurised ambient air is not bleed air from an aircraft engine.

The cooling system comprises a first cooling circuit configured to cool a first refrigerant, a second cooling circuit configured to cool a second refrigerant, and a common heat exchanger thermally coupling the first and second refrigerant. In other words, the cooling system consists of a cascade of cooling circuits thermally coupled to one another. Thus, the cooling capacity of the first cooling circuit is employed to cool the second refrigerant in the second cooling circuit, which, hence, can achieve a lower temperature (of the second refrigerant) compared to a single cooling circuit. Each of the first and second cooling circuits can be operated with an optimised energy consumption, which can be lower than the energy consumption of a single cooling circuit energised to provide the same cooling capacity.

The heat exchanger cooling the ambient air thermally couples the second refrigerant with the ambient air. Thus, the colder second refrigerant is employed to cool the ambient air, for example, for further use in the cabin of the aircraft. The air-conditioning system, hence, allows provision of conditioned and cold ambient air for the aircraft without the requirement of bleed air. Due to the cascade cooling circuits, the overall system can be operated more energy efficient.

As a mere example, the first and/or second cooling circuits can be vapour cycles. The first and/or second refrigerant can be a two-phase refrigerant that changes between a gaseous state and a liquid state. For instance, R134A (CH2 F-CF3), R245fa (1,1,1,3,3-pentafluoropropane), hydrofluoroolefin (HFO) refrigerants, CO₂ or natural gases can be used as a refrigerant for the first and/or second cooling circuit.

In an implementation variant, the first cooling circuit can comprise a first compressor configured to compress the first refrigerant, a first condenser configured to cool the compressed first refrigerant, and a first expansion valve downstream of the first condenser and configured to expand the first refrigerant. Due to the expansion of the first refrigerant, the first refrigerant has a colder temperature than after the first compressor. Thus, the first refrigerant can be used as a heat sink for the second cooling circuit.

In an implementation variant, the first cooling circuit can comprise a first compressor configured to compress the first refrigerant, a first condenser configured to cool the compressed first refrigerant, a first expansion valve downstream of the first condenser and configured to expand the first refrigerant, and a first evaporator configured to thermally couple the expanded first refrigerant with the ambient air. Specifically, contemplating a flow direction of the ambient air, the first evaporator is thermally coupled to the ambient air flow upstream of the heat exchanger thermally coupling the second refrigerant with the ambient air. In other words, the first cooling circuit having the first evaporator can perform a pre-cooling of the ambient air before it is cooled down to the intended temperature at the heat exchanger thermally coupling the second refrigerant with the ambient air.

In an implementation variant, the first evaporator and the common heat exchanger can be arranged in the first cooling circuit in series. For instance, the first refrigerant leaving the first evaporator can then enter the common heat exchanger. Alternatively, the first refrigerant leaving the common heat exchanger can then enter the first evaporator. The order of the first evaporator and common heat exchanger in series depends on the intended main cooling aim, i.e. either the ambient air (via the first evaporator) or the second cooling circuit (via the common heat exchanger).

In an implementation variant, the first evaporator and the common heat exchanger can be arranged in the first cooling circuit parallel to one another. In other words, the first refrigerant leaving the expansion valve can be directly conducted to the first evaporator and the common heat exchanger. Corresponding refrigerant duct lines branch after the expansion valve and will be re-joined downstream of the first evaporator and the common heat exchanger.

In an implementation variant, the first cooling circuit can comprise one or more control valves configured to control a mass or volume flow of first refrigerant towards one or more downstream components, such as the first evaporator and/or the common heat exchanger. Thus, such control valve(s) can be implemented in form of a shutoff valve or solenoid valve in a (branch) duct line or as a 3-way valve (having three ports) at the branch-off point or re-joining point in the refrigerant duct line.

In an implementation variant, the condenser can be configured to condense any gaseous refrigerant present in the first cooling circuit upstream of the condenser. Thus, in case of a two phase refrigerant, the condenser ensures that only liquid-state first refrigerant is conducted to the expansion valve. As a mere example, downstream of the expansion valve the first refrigerant may evaporate, i.e. change into the gaseous state. It is to be understood that the change into the gaseous state may additionally or exclusively take place in the first evaporator.

In an implementation variant, the aircraft air-conditioning system can further comprise a water extractor or water separator configured to extract water from the ambient air downstream of the first evaporator. Due to the precooling of the ambient air at/in the first evaporator, the ambient air can be dried/dehumidified in the water extractor before being conducted and processed any further. Since the refrigerant of the first cooling circuit is not cooled to a temperature required for cooling the ambient air to its intended temperature, i.e. since the first refrigerant is warmer, the risk of icing at the first evaporator and, hence, at the water extractor or separator is reduced. The first cooling circuit can be set in such a manner, that the first evaporator does not reach a temperature below a threshold temperature value, such as 5°C or 1°C or the like, i.e., above the freezing temperature of the water in the ambient air, but below its dew point. For instance, the compressor and/or expansion valve can be controlled to achieve such temperature of the first refrigerant in the first evaporator.

In an implementation variant, the water extractor can be integrated into the first evaporator. Thus, a very compact and energy efficient air-conditioning system can be achieved, where (pre-) conditioning of the ambient air can be provided at an early stage of processing the ambient air.

In an implementation variant, the common heat exchanger can be arranged in the first cooling circuit downstream of the first evaporator and upstream of the first compressor. Thus, the cooling process of the first refrigerant starts again after taking up heat (energy) from the second cooling circuit, particularly starting at the first compressor again.

In an implementation variant, the first condenser can be arranged in a ram air duct and can be configured to thermally couple the compressed first refrigerant with ram air in the ram air duct. Thus, an efficient cooling of the first refrigerant downstream of the first compressor can be achieved without requiring any fuel consuming component of the aircraft, such as an aircraft engine.

In an implementation variant, the second cooling circuit can comprise a second compressor configured to compress the second refrigerant, and a second expansion valve configured to expand the second refrigerant. The common heat exchanger is arranged in the second cooling circuit downstream of the second compressor and upstream of the second expansion valve and is configured to function as a second condenser by cooling the compressed second refrigerant. The cooling takes place with respect to the first refrigerant, i.e., the first refrigerant is a heat sink for the second refrigerant.

In an implementation variant, the common heat exchanger constituting a second condenser can condense any gaseous refrigerant. Thus, conducting gaseous refrigerant to the expansion valve can be avoided.

The second cooling circuit can be set up in the same manner as the first cooling circuit. Thus, any details described with respect to the first cooling circuit can likewise apply to the second cooling circuit, so that a repetition of these details is omitted for sake of brevity.

In an implementation variant, the aircraft air-conditioning system can further comprise an ambient air compressor configured to compress the unpressurised ambient air received from the ambient air inlet, and an electrical motor driving the ambient air compressor. Such ambient air compressor can particularly be employed, if the pressure of the unpressurised ambient air (i.e., the ambient air pressure in the environment of the aircraft) is not sufficient for conditioning the aircraft, such as the aircraft cabin. This includes any build-up pressure at an air inlet due to the flight speed of the aircraft.

In an implementation variant, the aircraft air-conditioning system can further comprise a cabin exhaust air line, and a cabin exhaust air turbine connected to the cabin exhaust air line. The cabin exhaust air turbine can be driven by a pressure difference between the pressure of the exhaust air from the cabin and any other region having a lower pressure and where the cabin exhaust air line ends.

As a mere example, the cabin exhaust air line can end at/in a ram air duct and/or at an opening in an aircraft skin. Thus, since the cabin of an aircraft is regularly pressurised, there will be a pressure difference between the pressurised cabin and the environment of the aircraft, which can be employed to recover energy.

In an implementation, the ambient air compressor and the cabin exhaust air turbine are arranged on a common shaft. Thus, the energy from the exhaust air of the cabin can be recovered to at least partially pressurise the ambient air that is conditioned by the air-conditioning system.

In an implementation variant, the aircraft air-conditioning system can further comprise an ambient air heat exchanger arranged in a ram air duct and configured to thermally couple the compressed ambient air with ram air in the ram air duct. Thus, the compressed ambient air, which is regularly heated during compression, can be cooled relative to the ambient air in the ram air duct.

In an implementation variant, the aircraft air-conditioning system can further comprise a cabin air recirculation line configured to conduct cabin air, and a mixer unit configured to mix the cooled ambient air with the recirculated cabin air from the cabin air recirculation line. Thus, the cabin of the aircraft can be provided with conditioned air from the ambient environment, i.e., fresh air conditioned for use in the aircraft cabin, and recirculation air, i.e., reused air from the cabin.

In an implementation variant, the aircraft air-conditioning system can further comprise a cooling air line configured to conduct cabin air to an electrical component requiring cooling, wherein the cooling air line opens into a ram air duct or ends at an outer skin of the aircraft, particularly an opening therein. Thus, since there is regularly a pressure difference between the cabin and the ram air duct, the cooling air conducted in the cooling air line may flow solely due to the pressure difference. Thus, efficient cooling of electrical components can be provided.

In an implementation variant, the cooling air line can branch off the cabin air recirculation line. Thus, efficient ducting can be provided for the overall air-conditioning system.

According to a second aspect to better understand the present disclosure, an aircraft comprises an aircraft air-conditioning system of the first aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft air-conditioning system;
- Figure 2: schematically illustrates an exemplary two-stage cooling system;
- Figure 3: schematically illustrates a T-s-diagram of the cooling system of Figure 2;
- Figure 4: schematically illustrates an exemplary two-stage cooling system of an aircraft air-conditioning system;
- Figure 5: schematically illustrates a P-h diagram of the cooling system of Figure 4;
- Figure 6: schematically illustrates a detail of an exemplary cooling circuit; and
- Figure 7: schematically illustrates an aircraft comprising an air-conditioning system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

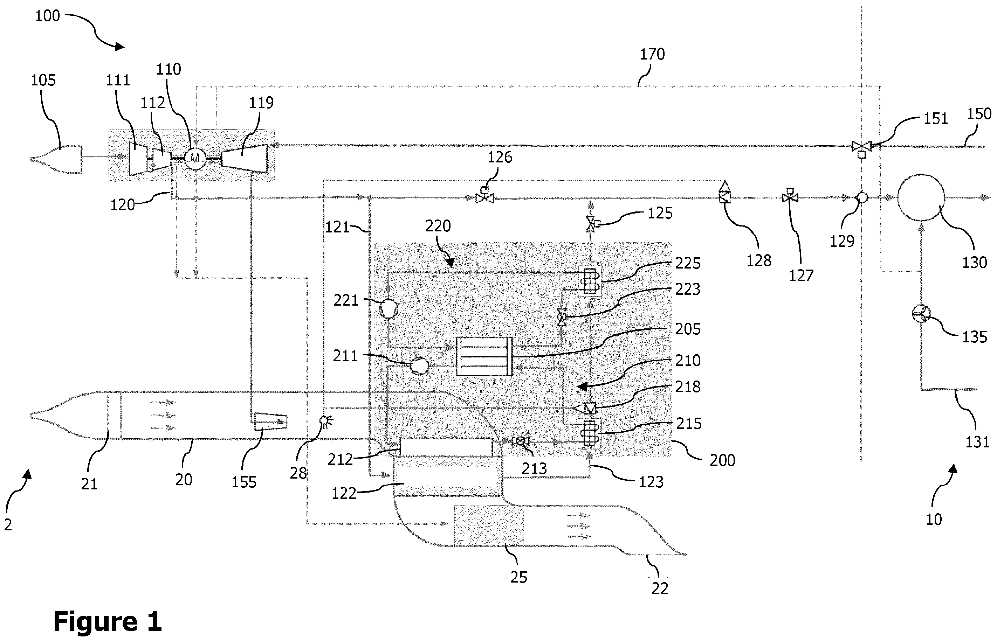

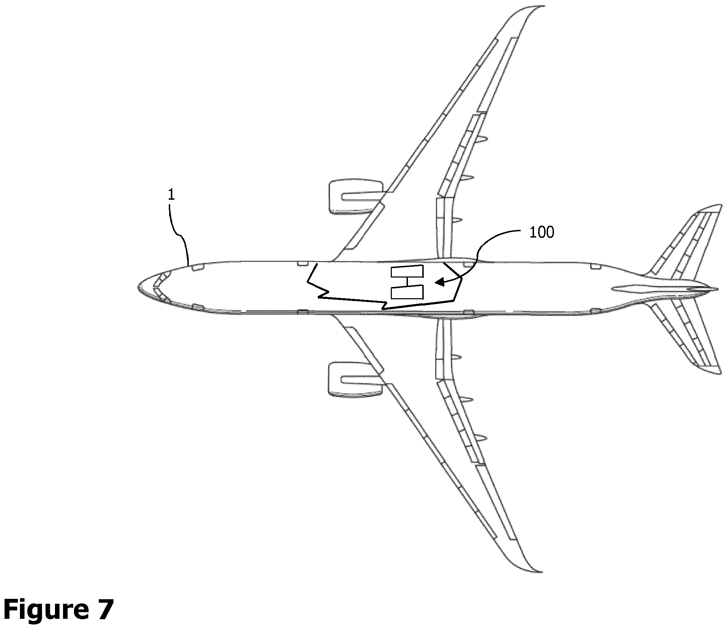

Figure 1 schematically illustrates an aircraft air-conditioning system 100 configured to provide conditioned air to an aircraft cabin 10. The air for the air-conditioning system 100 can be received from an ambient air inlet 105 configured to receive unpressurised ambient air from an environment 2 of the aircraft 1 (Figure 7). The ambient air inlet 105 can be arranged at an outer skin or similar area of the aircraft 1, where ambient air at the environmental pressure can be received. It is to be understood that during flight of the aircraft, a ram pressure may buildup at the ambient air inlet 105. Nevertheless, the ambient air can be considered as being at an ambient environmental pressure, as the ram pressure is still much lower than the pressure of bleed air taken from an aircraft engine (not illustrated).

The ambient air from the ambient air inlet 105 is conducted via an ambient air line 120 towards a cooling system 200 configured to cool a refrigerant employed to cool the ambient air. Specifically, the air-conditioning system 100 further comprises a heat exchanger 225 cooling the ambient air conducted by the ambient air line 120.

The cooling system 200 comprises a first cooling circuit 210 and a second cooling circuit 220, respectively configured to cool a first and second refrigerant. The first and second cooling circuits 210, 220 are thermally coupled by a common heat exchanger 205. For instance, the first cooling circuit 210 can be employed as a heat sink for the second cooling circuit at the common heat exchanger 205.

The ambient air is then cooled in the heat exchanger 225 thermally coupling the ambient air and the second refrigerant.

In more detail, the first cooling circuit can comprise a first compressor 211 configured to compress the first refrigerant, and a first condenser 212 configured to cool the compressed first refrigerant. The first condenser 212 can use any heat sink. As a mere example, Figure 1 illustrates the first condenser 212 arranged in a ram air duct 20, so that ram air (ambient air) is used as a heat sink for the first refrigerant. The first refrigerant, hence, is cooled in the condenser 212, where, for example, any gaseous refrigerant (of the first refrigerant) is condensed, i.e., is changed from the gaseous state into the liquid state.

Downstream of the condenser 212 can be a first expansion valve 213 that is configured to expand the compressed and condensed first refrigerant. On the one hand, the expanded first refrigerant can be conducted to the common heat exchanger 205 where it is a heat sink for the second refrigerant in the second cooling circuit 220.

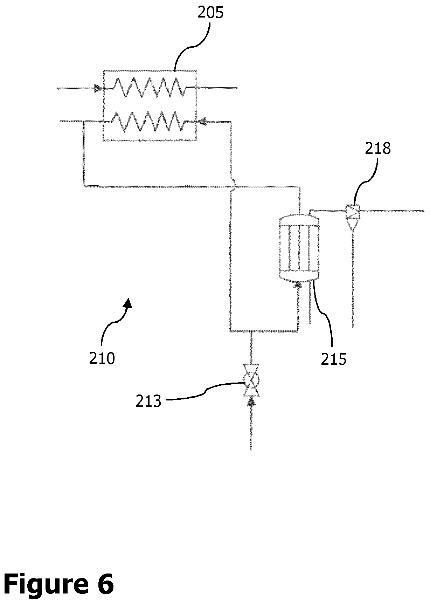

The portion of the common heat exchanger 205 can function as an evaporator. With reference to Figure 6 illustrating an alternative setup of a portion of the first cooling circuit 210, the common heat exchanger 205 can be fluidly coupled directly to the first expansion valve 213.

On the other hand, the first cooling circuit 210 can further comprise a first evaporator 215 configured to thermally couple the expanded first refrigerant with the ambient air. The first evaporator can be arranged, in a flow direction of the ambient air, upstream of the heat exchanger 225 thermally coupling the second refrigerant with the ambient air. Thus, the first evaporator 215 of the first cooling circuit 210 can be employed to pre-cool the ambient air.

With reference to Figures 1 and 6, the first evaporator 215 can be fluidly coupled directly to the first expansion valve 213. In other words, the expanded first refrigerant evaporates in the first evaporator 215. As can be derived from Figure 1, the first evaporator 215 can be installed in series with the common heat exchanger 205, so that the expanded first refrigerant is first evaporated in the first evaporator 215 before it enters the common heat exchanger 205. With reference to Figure 6, the first evaporator 215 can alternatively be installed in parallel with the common heat exchanger 205. Thus, the first evaporator 215 and the common heat exchanger 205 can receive expanded first refrigerant, so that the cooling capacity of both components may be higher compared to the in-series installations illustrated in Figure 1.

It is to be understood that the common heat exchanger 205 and the first evaporator 215 can also be installed in series with the common heat exchanger 205 as first component, so that the first refrigerant leaving the common heat exchanger 205 enters or is conducted into the first evaporator 215.

It is further to be understood that in the parallel arrangement at least one valve (not illustrated) can be provided in one or both of the branch duct lines for the first refrigerant, in order to control the amount (mass and/or volume flow) of the first refrigerant entering the common heat exchanger 205 and the first evaporator 215. Alternatively, each branch duct line may comprise separate evaporation valve instead of the illustrated single evaporation valve 213.

In any case, the aircraft air-conditioning system 100 can further comprise a water extractor 218 configured to extract water from the ambient air downstream of the first evaporator 215. Thus, the first cooling circuit 210 can be employed to provide a heat sink for the second cooling circuit 220, to precool the ambient air and to dry the ambient air in the water extractor 218. As a mere example, the water extractor 218 can be integrated into the first evaporator 215.

The second cooling circuit 220 can have a similar or the same structure as the first cooling circuit 210. For instance, the second cooling circuit 220 can comprise a second compressor 221 configured to compress the second refrigerant, and a second extension valve 223 configured to expand the second refrigerant. The common heat exchanger 205 is arranged in the second cooling circuit 220 downstream of the second compressor 221 and upstream of the second expansion valve 223. This allows to operate the common heat exchanger 205 as a second condenser cooling the compressed second refrigerant with respect to the first refrigerant as a heat sink. Likewise, any gaseous refrigerant can be condensed in the common heat exchanger 205.

It is to be understood that one or both of the first and second refrigerant can be any type of refrigerant. As a mere example, the first and/or second refrigerant can be a two-phase refrigerant that changes between a gaseous state and a liquid state, particularly at the components referred to as evaporator 215, 225 and condenser 212, 205. For instance, R134A (CH2 F-CF3), C02 or R245fa (1,1,1,3,3-pentafluoropropane) can be used as a refrigerant for the first and/or second cooling circuit 210, 220. Since the first cooling circuit is operated at a higher temperature, the first refrigerant can also be a water or the like.

The aircraft air-conditioning system 100 can further comprise an ambient air compressor 111, 112, that is exemplarily illustrated in Figure 1 as a two-stage compressor having a first stage 111 and a second stage 112. The ambient air compressor 111, 112 can be driven by an electric motor 110. Thus, the air-conditioning system 100 does not require bleed air, but can solely be operated with electric components.

The ambient air compressor 111, 112 can be supported by a cabin exhaust air turbine 119.

For instance, the air-conditioning system 100 can further comprise a cabin exhaust air line 150 removing air from the aircraft cabin 10. The cabin exhaust air line 150 can end at a cabin air ejector 155, which can eject the cabin exhaust air into the ambient environment 2. As a mere example, the cabin air ejector 105 may be arranged in the ram air duct 20.

Furthermore, the ram air duct 20 can have a ram air inlet 21 and a ram air outlet 22, so that a ram air flow can be achieved between ram air inlet 21 and ram air outlet 22, particularly, during a flight phase of the aircraft 1. A ram air fan 25 can further be provided in the ram air duct 20, in order to achieve a sufficient draft or flow of ram air through the ram air duct 20.

Such draft or flow of ram air can be employed with the cabin air ejector 155, as it facilitates sucking the cabin exhaust air out of the ejector 155. Nevertheless, if a pressure difference between the aircraft cabin 10 and the ambient environment 2 is present (e.g., during a high altitude flight), the cabin exhaust air in cabin exhaust air line 150 may be conveyed by this pressure difference.

The energy of the cabin exhaust air can be employed to drive the cabin exhaust air turbine 119. The ambient air compressor 111, 112 and the cabin exhaust air turbine 119 can be arranged on a common shaft.

Furthermore, the ram air draft or flow (ram air during flight or the air stream conveyed by the ram air fan 25) facilitates cooling the condenser 212 of the first cooling circuit 210.

Moreover, the aircraft air-conditioning system 100 can further comprise an ambient air heat exchanger 122 arranged in the ram air duct 20. This ambient air heat exchanger 122 can be configured to thermally couple the compressed ambient air in duct 120 and, particularly, ambient air branch 121, with the ram air (or air stream conveyed by fan 25) in the ram air duct 20. The ambient air downstream of the ambient air heat exchanger 122 can be conducted by a corresponding ambient air duct 123 to the first evaporator 215 and water separator 218.

The ambient air ducts 120, 121, 123 can include one or more valves 125, 126, 127. This allows controlling the amount of ambient air being cooled by the cooling system 200 or bypassing the cooling system 200 via valve 126. Back pressure valves 125 and 127 can be employed to increase the system pressure to ease water extraction in water separator 218.

In addition, a further water separator 128 may be provided in the ambient air duct 120 upstream of valve 127. This further water separator 128 can be used, if ambient air bypasses the cooling system 200. Alternatively, the further water separator 128 can be provided at the heat exchanger 225 thermally coupling the second refrigerant with the ambient air, or can be integrated into that heat exchanger 225.

Any separated water (from water extractor/separator 218 and/or water extractor/separator 128) can be conducted to a water injector 28, that may be configured to inject the water into the ram air duct 20. Such water injector 28 can be arranged in the ram air duct 20 upstream of the condenser 212 and/or ambient air heat exchanger 122, where the injected water evaporates and, hence, cools the ram air before streaming through the condenser 212 and/or ambient air heat exchanger 122.

Figure 1 further illustrates valves 129 and 151 in the ambient air duct 120 and the cabin exhaust air duct 150, respectively. Both valves can be arranged at a border of the aircraft cabin 10, i.e., at the border between the pressurised area (cabin 10) and an unpressurised area (outside of aircraft cabin 10). Valve 129 can be implemented as a check valve.

The aircraft air-conditioning system 100 can further comprise a mixing unit 130 receiving ambient air from ambient air duct 120 and/or from cold ambient air duct 123 (i.e., conditioned air), and recirculation air from cabin air recirculation line 131. Thus, fresh conditioned air can be mixed with reused cabin air. A recirculation air fan 135 can be provided in the cabin air recirculation line 131.

Figure 1 further illustrates in dashed lines a cooling air line 170 configured to conduct cabin air to an electrical component requiring cooling. Such electrical component can be the motor 110 driving the ambient air compressor 111, 112. The cooling air line 170 may also end in the ambient environment 2, for example, in the ram air duct 20.

It is to be understood that the cooling air line 170 may further be configured to conduct cabin air to one or both of the first compressor 211 and second compressor 221 of the first and second cooling circuits 210, 220, although not illustrated in Figure 1. Since these compressors 211, 221 can also be operated by an electric motor, air cooling can be provided with cabin air via cooling air line 170.

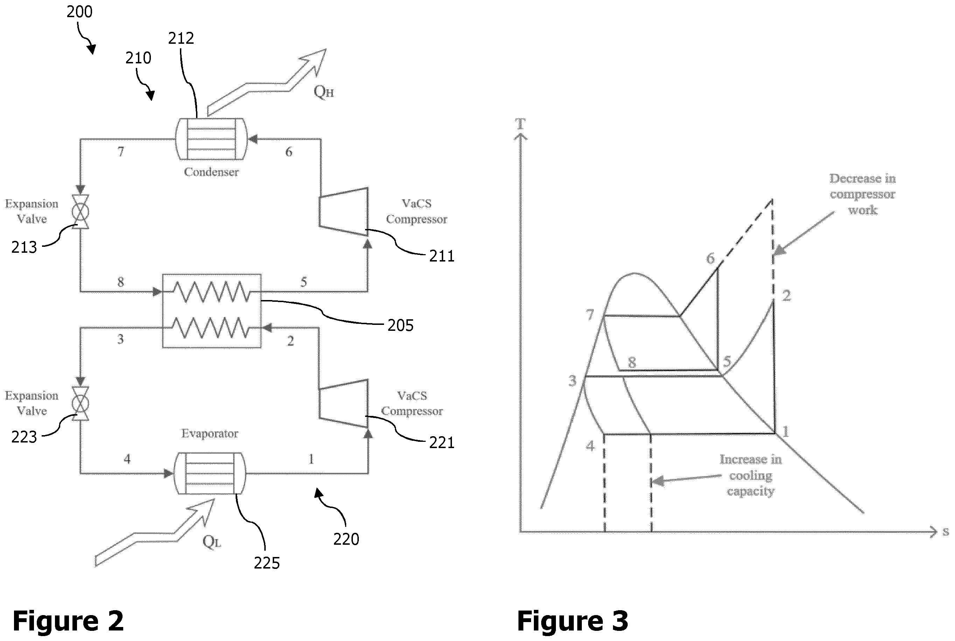

Figure 2 schematically illustrates an exemplary two-stage cooling system. This two-stage cooling system can be the same as cooling system 200 in Figure 1, where the first evaporator 215 has been omitted for sake of brevity. Figure 3 schematically illustrates a T-s-diagram of the cooling system of Figure 2.

As can be derived from Figures 2 and 3, the first and second refrigerant of the first and second cooling circuits 210, 220 experience an increase in temperature when being compressed in the respective first and second compressors 211, 221.

However, the compressor work of both, first and second compressors 211, 221, is less than a hypothetical compressor work of a single compressor illustrated in dashed lines to achieve the same effect. In addition, due to the two-stage cooling system 200, the temperature of the second refrigerant can be lower, i.e. in the cooling capacity can be increased as is further illustrated with dashed lines in Figure 3. Thus, the two-stage cooling system 200 allows operating in a more energy efficient manner and can even achieve lower temperatures of the (second) refrigerant.

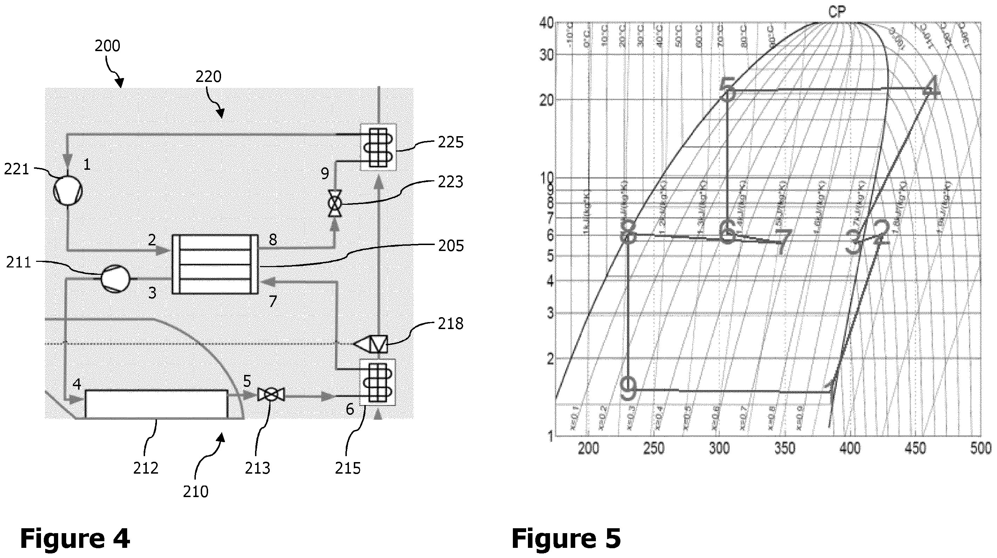

Figures 4 and 5 schematically illustrate an exemplary two-stage cooling system 200 as in Figure 1, and a P-h diagram of such cooling system 200, respectively.

As can be derived from Figure 5, the first evaporator 215 can be operated in a temperature range above freezing temperatures (see diagram points 6 and 7), while the second evaporator 225 (see diagram points 9 and 1) may achieve much colder temperatures. Thus, the first evaporator 215 as well as the water separator 218 can be operated without the risk of icing, and the overall cooling system 200 achieves good air-conditioning in an energy-efficient manner.

Figure 7 schematically illustrates an aircraft 1 comprising an air-conditioning system 100 described with respect to Figures 1 to 6.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft air-conditioning system (100), comprising:
an ambient air inlet (105) configured to receive unpressurised ambient air;
a cooling system (200) configured to cool a refrigerant; and
a heat exchanger (225) cooling the ambient air,
**characterised in that**
the cooling system (200) comprises:
a first cooling circuit (210) configured to cool a first refrigerant;
a second cooling circuit (220) configured to cool a second refrigerant; and
a common heat exchanger (205) thermally coupling the first and second refrigerant,
wherein the heat exchanger (225) cooling the ambient air thermally couples the second refrigerant with the ambient air.

2. The aircraft air-conditioning system (100) of claim 1, wherein the first cooling circuit (210) comprises:
a first compressor (211) configured to compress the first refrigerant;
a first condenser (212) configured to cool the compressed first refrigerant, and preferably condense any gaseous refrigerant;
a first expansion valve (213) downstream of the first condenser (212) and configured to expand the first refrigerant; and
a first evaporator (215) configured to thermally couple the expanded first refrigerant with the ambient air, in a flow of the ambient air, upstream of the heat exchanger (225) thermally coupling the second refrigerant with the ambient air.

3. The aircraft air-conditioning system (100) of claim 2, further comprising:
a water extractor (218) configured to extract water from the ambient air downstream of the first evaporator (215),
wherein, preferably, the water extractor (218) is integrated into the first evaporator (215).

4. The aircraft air-conditioning system (100) of claim 2 or 3, wherein the common heat exchanger (205) is arranged in the first cooling circuit (210) downstream of the first evaporator (215) and upstream of the first compressor (211), and/or
wherein the first condenser (212) is arranged in a ram air duct (20) and is configured to thermally couple the compressed first refrigerant with ram air in the ram air duct (20).

5. The aircraft air-conditioning system (100) of any of claims 1 to 4, wherein the second cooling circuit (220) comprises:
a second compressor (221) configured to compress the second refrigerant; and
a second expansion valve (223) configured to expand the second refrigerant,
wherein the common heat exchanger (205) is arranged in the second cooling circuit (220) downstream of the second compressor (221) and upstream of the second expansion valve (223) and is configured to function as a second condenser by cooling the compressed second refrigerant, and preferably condense any gaseous refrigerant.

6. The aircraft air-conditioning system (100) of any of claims 1 to 5, further comprising:
an ambient air compressor (111, 112) configured to compress the unpressurised ambient air received from the ambient air inlet (105); and
an electrical motor (110) driving the ambient air compressor.

7. The aircraft air-conditioning system (100) of claim 6, further comprising:
a cabin exhaust air line (150); and
a cabin exhaust air turbine (119) connected to the cabin exhaust air line (150),
wherein the ambient air compressor (111, 112) and the cabin exhaust air turbine (119) are arranged on a common shaft

8. The aircraft air-conditioning system (100) of claim 6 or 7, further comprising:
an ambient air heat exchanger (122) arranged in a ram air duct (20) and configured to thermally couple the compressed ambient air with ram air in the ram air duct (20).

9. The aircraft air-conditioning system (100) of one of claims 1 to 8, further comprising:
a cabin air recirculation line (131) configured to conduct cabin air; and
a mixer unit (130) configured to mix the cooled ambient air with the recirculated cabin air from the cabin air recirculation line (131).

10. The aircraft air-conditioning system (100) of claim 9, further comprising:
a cooling air line (170) configured to conduct cabin air to an electrical component (110, 211, 221) requiring cooling,
wherein the cooling air line (170) opens into a ram air duct (20), wherein, preferably, the cooling air line (170) branches off the cabin air recirculation line (131).

11. An aircraft (1), comprising:
an aircraft air-conditioning system (100) of one of claims 1 to 10.

## Amended claims

### Amended claims in accordance with Rule 137(2) EPC.

1. An aircraft air-conditioning system (100), comprising:
an ambient air inlet (105) configured to receive unpressurised ambient air;
a cooling system (200) configured to cool a refrigerant; and
a heat exchanger (225) cooling the ambient air,
**characterised in that**
the cooling system (200) comprises:
a first cooling circuit (210) configured to cool a first refrigerant;
a second cooling circuit (220) configured to cool a second refrigerant; and
a common heat exchanger (205) thermally coupling the first and second refrigerant,
wherein the heat exchanger (225) cooling the ambient air thermally couples the second refrigerant with the ambient air, and
**in that** the first cooling circuit (210) comprises:
a first compressor (211) configured to compress the first refrigerant;
a first condenser (212) configured to cool the compressed first refrigerant, and preferably condense any gaseous refrigerant;
a first expansion valve (213) downstream of the first condenser (212) and configured to expand the first refrigerant; and
a first evaporator (215) configured to thermally couple the expanded first refrigerant with the ambient air, in a flow of the ambient air, upstream of the heat exchanger (225) thermally coupling the second refrigerant with the ambient air.

2. The aircraft air-conditioning system (100) of claim 1, further comprising:
a water extractor (218) configured to extract water from the ambient air downstream of the first evaporator (215),
wherein, preferably, the water extractor (218) is integrated into the first evaporator (215).

3. The aircraft air-conditioning system (100) of claim 1 or 2, wherein the common heat exchanger (205) is arranged in the first cooling circuit (210) downstream of the first evaporator (215) and upstream of the first compressor (211), and/or
wherein the first condenser (212) is arranged in a ram air duct (20) and is configured to thermally couple the compressed first refrigerant with ram air in the ram air duct (20).

4. The aircraft air-conditioning system (100) of any of claims 1 to 3, wherein the second cooling circuit (220) comprises:
a second compressor (221) configured to compress the second refrigerant; and
a second expansion valve (223) configured to expand the second refrigerant,
wherein the common heat exchanger (205) is arranged in the second cooling circuit (220) downstream of the second compressor (221) and upstream of the second expansion valve (223) and is configured to function as a second condenser by cooling the compressed second refrigerant, and preferably condense any gaseous refrigerant.

5. The aircraft air-conditioning system (100) of any of claims 1 to 4, further comprising:
an ambient air compressor (111, 112) configured to compress the unpressurised ambient air received from the ambient air inlet (105); and
an electrical motor (110) driving the ambient air compressor.

6. The aircraft air-conditioning system (100) of claim 5, further comprising:
a cabin exhaust air line (150); and
a cabin exhaust air turbine (119) connected to the cabin exhaust air line (150),
wherein the ambient air compressor (111, 112) and the cabin exhaust air turbine (119) are arranged on a common shaft

7. The aircraft air-conditioning system (100) of claim 5 or 6, further comprising:
an ambient air heat exchanger (122) arranged in a ram air duct (20) and configured to thermally couple the compressed ambient air with ram air in the ram air duct (20).

8. The aircraft air-conditioning system (100) of one of claims 1 to 7, further comprising:
a cabin air recirculation line (131) configured to conduct cabin air; and
a mixer unit (130) configured to mix the cooled ambient air with the recirculated cabin air from the cabin air recirculation line (131).

9. The aircraft air-conditioning system (100) of claim 8, further comprising:
a cooling air line (170) configured to conduct cabin air to an electrical component (110, 211, 221) requiring cooling,
wherein the cooling air line (170) opens into a ram air duct (20), wherein, preferably, the cooling air line (170) branches off the cabin air recirculation line (131).

10. An aircraft (1), comprising:
an aircraft air-conditioning system (100) of one of claims 1 to 9.
